# EUROPEAN PATENT SPECIFICATION

(11) **EP 1 604 765 B1**
(45) Date of publication and mention of the grant of the patent: **28.05.2008**
(21) Application number: 05012222.5
(22) Date of filing: 07.06.2005
(51) Int. Cl.: B23D 45/04, B23D 59/00, B27B 5/29

(54) **Angle indicator for miter saw**
Winkelanzeige für eine Gehrungssäge
Indicateur d'angle pour scie à onglet

(30) Priority: 09.06.2004 CN 200420067839
(43) Date of publication of application: 14.12.2005
(73) Proprietor: Rexon Industrial Corp., Ltd., Tali Taichung (TW)
(72) Inventor: Chen, Jung-Huo, Tali Taichung (TW)
(74) Representative: Becker Kurig Straus

(56) References cited:
- EP-A- 0 642 897
- EP-A- 1 522 363
- US-A1- 2004 089 125
- PATENT ABSTRACTS OF JAPAN vol. 2000, no. 12, 3 January 2001 (2001-01-03) -& JP 2000 254817 A (MAKITA CORP), 19 September 2000 (2000-09-19)

## Description

### BACKGROUND OF THE INVENTION

### 1. Field of the Invention

The present invention relates to a miter saw according to the preamble of claim 1. Such a saw is known from document EP 0 642 897 A.

### 2. Description of the Related Art

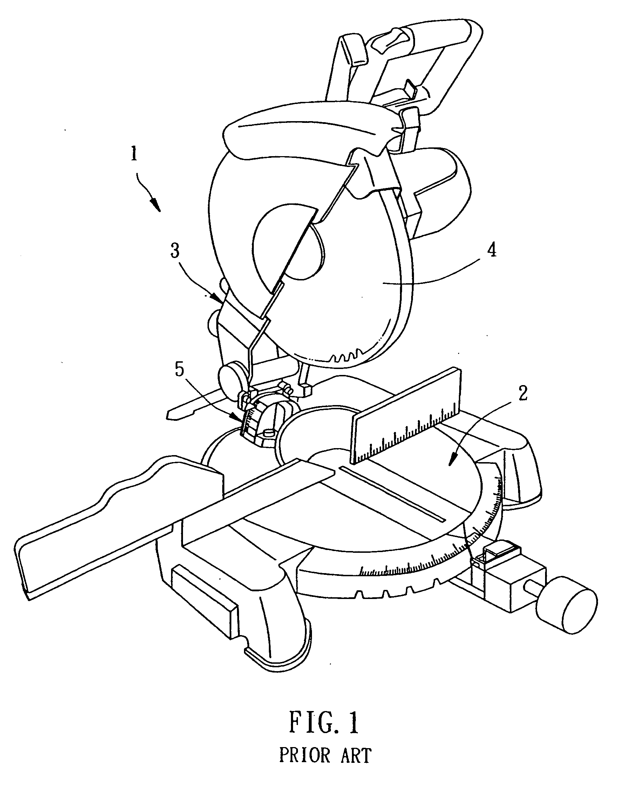

FIG. 1 shows a conventional miter saw **1,** which comprises a worktable **2,** a swivel arm **3** on which a saw blade **4** is rotatably mounted, and an adjustment mechanism **5** connected between the worktable **2** and the swivel arm **3** for enabling the swivel arm **3** to be swiveled relative to the worktable **2.** During operation, the operator can adjust the bevel angle of the swivel arm **3** relative to the worktable **2** for cutting the workpiece that is supported on the worktable **2** at different angles.

Further, graduations are made on the periphery of the adjustment device **5,** and a pointer is provided at the swivel arm **3.** When pivoting the swivel arm **3,** the operator can synchronously observe the bevel angle of the swivel arm **3** by means of the indication of the pointer at the graduations.

However, because the adjustment mechanism **5** is connected between the worktable **2** and the swivel arm **3,** the swivel arm **3** may keep the operator's sight from the indication of the pointer at the graduations, resulting in an adjustment inconvenience.

EP 0 642 897 discloses a bevel angle indicator for a saw. A dial indicating the angle between the surface of the saw's table and the plane of the saw blade is coupled via a gearing mechanism to the saw's pivot block and support, which carries an indication scale. The gearing mechanism comprises a rack attached to the pivot block and a pinion, which advances along the rack upon adjustment of the bevel angle and is connected to a pointer to indicate the bevel angle on the scale.

### SUMMARY OF THE INVENTION

It is the primary objective of the present invention to provide an indicator for a miter saw for indicating a bevel cutting angle of the miter saw, which allows the user to read the indication easily.

It is another objective of the present invention to provide an indicator for a miter saw for indicating a bevel cutting angle of the miter saw, which is simple in structure and is easy and inexpensive to manufacture.

To achieve these objectives of the present invention, a miter saw as defined by claim 1 is provided

Further advantageous embodiments are defined by the dependent claims 2-14.

### BRIEF DESCRIPTION OF THE DRAWINGS

FIG. 1 is a perspective view of a miter saw constructed according to the prior art.
FIG. 2 is a perspective view of a miter saw constructed according to the present invention.
FIG. 3 is a bottom view in an enlarged scale of a part of FIG. 2., showing the arrangement of the angle indicator.
FIG. 4 is a sectional view of the angle indicator according to the present invention.
FIG. 5 is a partial respective view, showing an alternate form of the angle indicator according to the present invention.
FIG. 6 is a sectional view of the angle indicator shown in FIG. 5.
FIG. 7 is a schematic drawing showing the arrangement of another alternate form of the angle indicator in a miter saw according to the present invention.

### DETAILED DESCRIPTION OF THE INVENTION

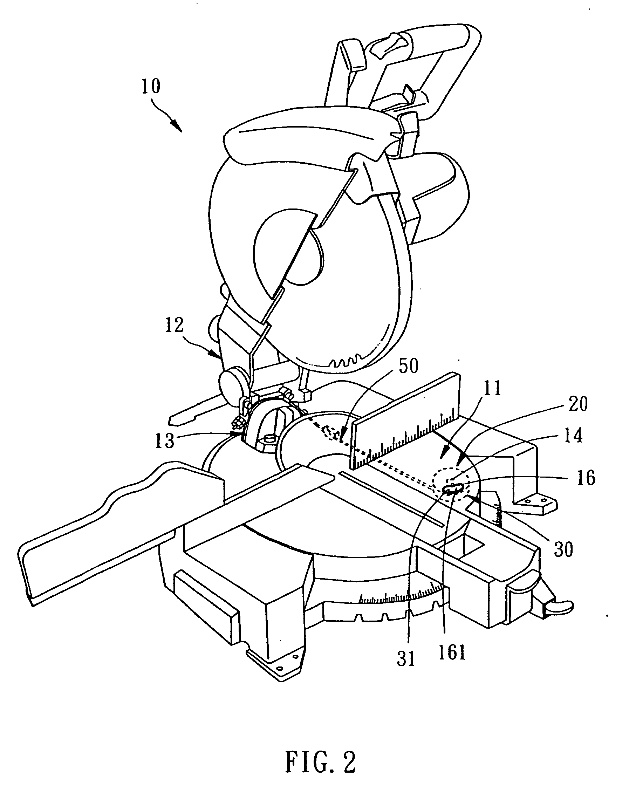

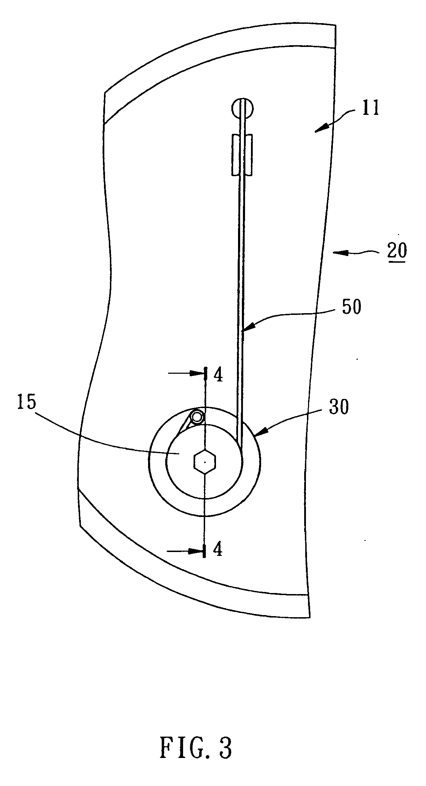

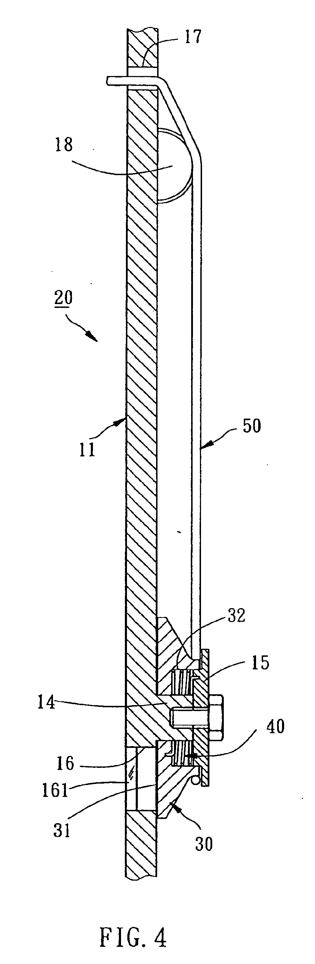

Referring to FIGS. 2-4, an angle indicator **20** is shown installed in a miter saw **10.** The miter saw **10** comprises a worktable **11,** a swivel arm **12,** and an adjustment mechanism **13** connected between the worktable **11** and the swivel arm **12** for enabling the swivel arm **12** to be pivoted relative to the worktable **11.** The angle indicator **20** comprises a wheel **30** rotatably mounted on the bottom wall of the worktable **11,** a spring member **40** provided between the wheel **30** and the worktable **11,** and a rope **50** connected between the swivel arm **11** and the wheel **30.**

The wheel **30** is rotatably mounted on a pivot **14** that extends downwards from the bottom wall of the worktable **11.** A disk **15** is affixed to the pivot **14** to hold the wheel **30** in place, for enabling the wheel **30** to be rotated on the pivot **14.** The wheel **30** has an indication zone **31** formed of graduations in one side thereof and facing the bottom wall of the worktable **11.** The worktable **11** has a through hole **16** corresponding to the indication zone **31.** The through hole **16** is covered with a transparent covering **161** that prevents falling of cut chips on the indication zone **31,** so that the indication zone **31** can be seen through the transparent covering **161.**

The spring member **40** is mounted in a recessed hole **32** in one side of the wheel **30** opposite to the indication zone **31** and connected between the wheel **30** and the disk **15** to provide a torsional return force upon rotation of the wheel **30** on the pivot **14.**

The rope **50,** which is made of steel in this embodiment, has one end fastened to the wheel **30,** and the other end inserted through a hole **17** in the worktable **11** and fastened to the swivel arm **12.** Therefore, when pivoting the swivel arm **12,** the rope **50** is forced to turn the wheel **30** about the pivot **14.** Further, a circular arched rope guider **18** is provided at the bottom side of the worktable **11** to guide movement of the rope **50.**

When the operator is pivoting the swivel arm **12,** the rope **50** is forced to turn the wheel **30** about the pivot **14,** and therefore the user can read the bevel angle of the swivel arm **12** by viewing the indication of the indication zone **31** at the through hole **16.** Because the swivel arm **12** is not in the way between the operator's eyes and the through hole **16** when the operator is operating the miter saw **10,** the swivel arm **12** does not keep the user's sight from the indication of the indication zone **31** at the through hole **16.**

Further, a guiding roller may be used to substitute for the aforesaid circularly arched rope guider **18,** thereby lowering friction resistance.

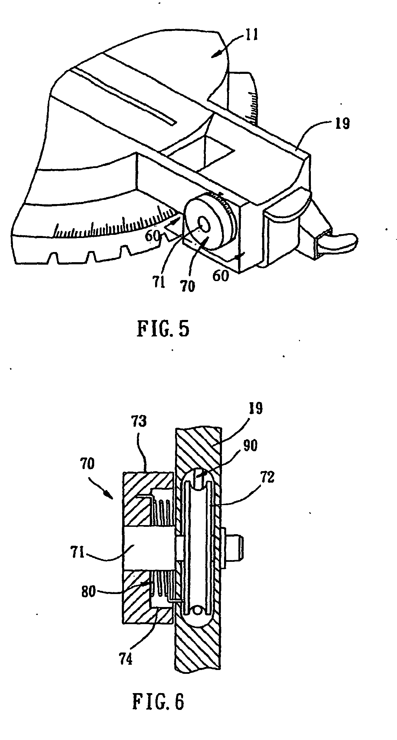

FIGS. 5 and 6 show an alternate form of the present invention. According to this embodiment, the angle indicator **60** is comprised of a wheel **70,** a spring member **80,** and a rope **90.** The wheel **70** is rotatably mounted to a handle **19** at the worktable **11** with a pivot **71,** having an indication zone **73** formed of graduations in the periphery thereof. The other end of the pivot **71** is mounted with a roller **72** that is synchronously rotatable with the wheel **70.** The spring member **80** is mounted in a recessed hole **74** in one side of the wheel **70,** and connected between the wheel **70** and the handle **19.** The rope **90** has one end connected to the swivel arm (not shown) and the other end connected to the roller **72.**

When the operator adjusting the angle of the swivel arm, the rope **90** is forced to turn the roller **72** and the wheel **70** synchronously, and therefore the operator can know the bevel angle of the swivel arm by means of the indication of the indication zone **73.**

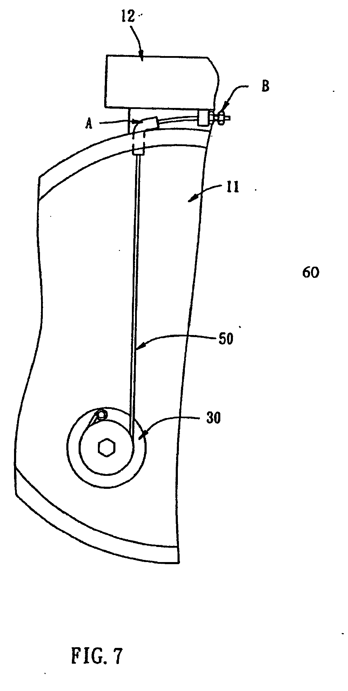

FIG. 7 shows another alternate form of the present invention. According to this embodiment, the rope **50** has one end connected to the wheel **30,** and the other end inserted through a bent guiding tube **A** in the rear sidewall of the worktable **11** and then connected to the swivel arm **12** through a tension adjustment screw **B** that can be rotated to adjust the tension of the rope **50.**

As indicated above, the miter saw according to the present invention has the following advantages:
1. The invention automatically indicates the bevel angle of the swivel arm during operation of the miter saw, and the swivel arm does not keep the operator's sight from the indication.
2. The wheel of the angle indicator can be installed in any of a variety of positions in the worktable subject to the model of the miter saw.
3. The angle indicator is easy and inexpensive to manufacture, and effectively improves the working efficiency of the miter saw.

Although particular embodiments of the invention have been described in detail for purposes of illustration, various modifications and enhancements may be made without departing from the scope of the invention as defined by the claims.

## Claims

1. A miter saw (10) comprising:
a worktable (11);
a swivel arm (12) swivelably mounted to the worktable (11);
a saw blade rotatably mounted to the swivel arm (12); and
an angle indicator (20, 60) for indicating a bevel angle of the saw blade relative to the worktable (11), the angle indicator (20, 60) comprising:
a wheel (30, 70) pivotally mounted to the worktable (11), said wheel (30, 70) having an indication zone (31, 73); **characterized in that** the miter saw further comprises:
a spring member (40, 80) connected between the worktable (11) and the wheel (30, 70) for,providing a return force to the wheel (30, 70) relative to the worktable (11); and
a rope (50, 90) having an end connected to the swivel arm (12) and the other end connected to the wheel (30, 70) for pulling the wheel (30, 70) to rotate relative to the worktable (11) when a user swivels the swivel arm (12) relative to the worktable (11).

2. The miter saw (10) as claimed in claim 1, wherein said wheel (30, 70) is pivotally mounted to a bottom wall of the worktable (11) of the miter saw (10); the worktable (11) of the miter saw (10) has a through hole (16) for viewing of the indication zone (31, 73) of said wheel (30, 70).

3. The miter saw (10) as claimed in claim 2, wherein said through hole (16) is covered with a transparent covering (161).

4. The miter saw (10) as claimed in claim 2, wherein said wheel (30, 70) is pivotally mounted to a pivot (14, 71) that extends downwards from the bottom wall of the worktable (11) of the miter saw (10).

5. The miter saw (10) as claimed in claim 4, wherein said pivot (14, 71) has a distal end fixedly mounted with a disk (15).

6. The miter saw (10) as claimed in claim 1, wherein said wheel (30, 70) is pivotally mounted to a handle (19) provided at the worktable (11) of the miter saw (10).

7. The miter saw (10) as claimed in claim 6, wherein said indication zone (31, 73) is formed on a periphery of said wheel (30, 70).

8. The miter saw (10) as claimed in claim 6, wherein said wheel (30, 70) has a pivot (14, 71) pivotally mounted to the handle (19) of the miter saw (10).

9. The miter saw (10) as claimed in claim 8, wherein said pivot (14, 71) of said wheel (30, 70) has an end mounted with a roller for synchronous rotation with said wheel (30, 70).

10. The miter saw (10) as claimed in claim 1, wherein said wheel (30, 70) has a recessed hole in a center of one side thereof for accommodating said spring member (40, 80).

11. The miter saw (10) as claimed in claim 1, further comprising a rope (50, 90) guider mounted to the worktable (11) of the miter saw (10) for guiding the movement of said rope (50, 90).

12. The miter saw (10) as claimed in claim 1, further comprising a rope (50, 90) guiding roller rotatably mounted to the worktable (11) of the miter saw (10) for guiding the movement of said rope (50, 90).

13. The miter saw (10) as claimed in claim 1, further comprising a guiding tube mounted to the worktable (11) of the miter saw (10) for insertion of said rope (50, 90).

14. The miter saw (10) as claimed in claim 1, wherein said indication zone (31, 73) is formed of graduations.

## Patentansprüche

1. Gehrungssäge (10) umfassend:
Einen Arbeitstisch (11);
einen an dem Arbeitstisch (11) schwenkbar befestigten Schwenkarm (12);
ein an dem Schwenkarm (12) drehbar befestigtes Sägeblatt; und
eine Winkelanzeigeeinrichtung (20, 60) zum Anzeigen eines Stellwinkels des Sägeblatts relativ zu dem Arbeitstisch (11), wobei der Winkelanzeiger (20, 60) umfasst:
Ein an dem Arbeitstisch (11) drehbar befestigtes Rad (30, 70), wobei das Rad (30, 70) eine Anzeigezone (31, 73) aufweist, **dadurch gekennzeichnet, dass** die Gehrungssäge weiterhin umfasst:
Ein, zwischen dem Arbeitstisch (11) und dem Rad (30, 70) verbundenes Federelement (40, 80) zur Bereitstellung einer Rückstellkraft auf das Rad (30, 70) relativ zu dem Arbeitstisch (11); und
ein Seil (50, 90), dessen eines Ende mit dem Schwenkarm (12) verbunden ist und das andere Ende mit dem Rad (30, 70) verbunden ist, um das Rad (30, 70) zu ziehen, damit es sich relativ zu dem Arbeitstisch (11) dreht, wenn ein Anwender den Schwenkarm (12) relativ zu dem Arbeitstisch (11) schwenkt.

2. Gehrungssäge (10) nach Anspruch 1, worin das Rad (30, 70) drehbar an einer unteren Wandung des Arbeitstisches (11) der Gehrungssäge (10) befestigt ist, wobei der Arbeitstisch (11) der Gehrungssäge (10) ein Durchgangsloch (16) zum Ansehen des Anzeigezone (31, 73) des Rads (30, 70) aufweist.

3. Gehrungssäge (10) nach Anspruch 2, worin das Durchgangsloch (16) mit einer transparenten Abdeckung (161) bedeckt ist.

4. Gehrungssäge (10) nach Anspruch 2, worin das Rad (30, 70) drehbar an einer Drehzapfen (14, 71) befestigt ist, der sich von der unteren Wandung des Arbeitstisches (11) der Gehrungssäge (10) nach unten erstreckt.

5. Gehrungssäge (10) nach Anspruch 4, worin der Drehzapfen (14, 71) ein distales Ende aufweist, das fest mit einer Scheibe (15) verbunden ist.

6. Gehrungssäge (10) nach Anspruch 1, worin das Rad (30, 70) drehbar an einem Griff (19) befestigt ist, der an dem Arbeitstisch (11) der Gehrungssäge (10) bereitgestellt ist.

7. Gehrungssäge (10) nach Anspruch 6, worin die Anzeigezone (31, 73) an einem Umfang des Rads (30, 70) ausgebildet ist.

8. Gehrungssäge (10) nach Anspruch 6, worin das Rad (30, 70) einen Drehzapfen (14, 71) aufweist, der drehbar an dem Griff (19) der Gehrungssäge (10) befestigt ist.

9. Gehrungssäge (10) nach Anspruch 8, worin der Drehzapfen (14, 71) des Rads (30, 70) ein Ende aufweist, das mit einer Rolle für eine synchrone Drehbewegung mit dem Rad (30, 70) verbunden ist.

10. Gehrungssäge (10) nach Anspruch 1, worin das Rad (30, 70) ein ausgespartes Loch in einer Mitte einer Seite davon aufweist, um das Federelement (40, 80) aufzunehmen.

11. Gehrungssäge (10) nach Anspruch 1, die weiterhin eine Seil (50, 90)-führung umfasst, die an dem Arbeitstisch (11) der Gehrungssäge (10) befestigt ist, um die Bewegung des Seils (50, 90) zu führen.

12. Gehrungssäge (10) nach Anspruch 1, die weiterhin eine Seil (50, 90)-führende Rolle umfasst, die drehbar an dem Arbeitstisch (11) der Gehrungssäge (10) befestigt ist, um die Bewegung des Seils (50, 90) zu führen.

13. Gehrungssäge (10) nach Anspruch 1, die weiterhin eine Führungsröhre umfasst, die an dem Arbeitstisch (11) der Gehrungssäge (10) zum Einführen des Seils (50, 90) befestigt ist.

14. Gehrungssäge (10) nach Anspruch 1, worin die Anzeigezone (31, 73) mit Gradeinteilungen ausgebildet ist.

## Revendications

1. Une scie à onglet (10) comprenant :
une table de travail (11) ;
un bras pivot (12) monté pivotant sur la table de travail (11);
une lame de scie montée rotative sur le bras pivot (12);
un indicateur d'angle (20, 60) pour indiquer un angle oblique de la lame de scie par rapport à la table de travail (11), l'indicateur d'angle (20, 60) comprenant :
une roue (30, 70) montée pivotante sur la table de travail (11) ladite roue (30, 70) comportant une zone d'indication (31, 73) , **caractérisée en ce que** la scie à onglet comprend en outre :
un membre ressort (40, 80) connecté entre la table de travail (11) et la roue (30, 70) pour fournir une force de rappel à la roue (30, 70) par rapport à la table de travail (11) ; et un câble (50, 90) comportant une extrémité connectée à l'arbre pivot (12) et l'autre extrémité connectée à la roue (30, 70) pour tirer la roue (30, 70) afin de pivoter par rapport à la table de travail (11) lorsqu'un utilisateur fait pivoter l'arbre pivotant (12) par rapport à la table de travail (11).

2. La scie à onglet (10) telle que revendiquée dans la revendication 1 dans laquelle ladite roue (30, 70) est montée pivotante sur une face inférieure de la table de travail (11) de la scie à onglet (10) ; la table de travail (11) de la scie à onglet (10) comporte un regard (16) pour la visualisation de la zone d'indication (31, 73) de la roue (30, 70).

3. La scie à onglet (10) telle que revendiquée dans la revendication 2 dans laquelle ledit regard est recouvert par un couvercle transparent (161).

4. La scie à onglet (10) telle que revendiquée dans la revendication 2 dans laquelle ladite roue (30, 70) est montée pivotante sur un pivot (14, 71) qui s'étend vers le bas à partir de la face inférieure de la table de travail (11) de la scie à onglet (10).

5. La scie à onglet (10) telle que revendiquée dans la revendication 4 dans laquelle ledit pivot (14, 71) comporte une extrémité distante à laquelle est monté fixe un disque (15).

6. La scie à onglet (10) telle que revendiquée dans la revendication 1 dans laquelle ladite roue (30, 70) est montée pivotante sur une poignée (19) aménagée à la table de travail (11) de la scie à onglet (10).

7. La scie à onglet (10) telle que revendiquée dans la revendication 6 dans laquelle ladite zone d'indication (31, 73) est formée à la périphérie de ladite roue (30, 70).

8. La scie à onglet (10) telle que revendiquée dans la revendication 6 dans laquelle ladite roue (30, 70) comporte un pivot (14, 71) monté pivotant à la poignée (19) de la scie à onglet (10).

9. La scie à onglet (10) telle que revendiquée dans la revendication 8 dans laquelle ledit pivot 14, 71) de ladite roue (30, 70) comporte une extrémité montée avec un rouleau pour rotation synchrone avec ladite roue (30, 70).

10. La scie à onglet (10) telle que revendiquée dans la revendication 1 dans laquelle ladite roue (30, 70) comporte un trou encastré au centre d'une de ses faces pour recevoir ledit membre ressort (40, 80).

11. La scie à onglet (10) telle que revendiquée dans la revendication 1 comprenant en outre un guide de câble (50, 90) monté sur la table de travail (11) de la scie à onglet (10) pour guider le mouvement dudit câble (50, 90).

12. La scie à onglet (10) telle que revendiquée dans la revendication 1 comprenant en outre un rouleau de guidage du câble (50, 90) monté rotatif sur la table de travail (11) de la scie à onglet (10) pour guider le mouvement dudit câble (50, 90).

13. La scie à onglet (10) telle que revendiquée dans la revendication 1 comprenant en outre u tube de guidage monté sur la table de travail (11) de la scie à onglet (10) pour l'insertion dudit câble (50, 90).

14. La scie à onglet (10) telle que revendiquée dans la revendication 1 dans laquelle ladite zone d'indication (31, 73) est formé de graduations.
